# EUROPÄISCHE PATENTSCHRIFT

(11) **EP 3 364 600 B1**
(45) Veröffentlichungstag und Bekanntmachung des Hinweises auf die Patenterteilung: **26.05.2021**
(21) Anmeldenummer: 17156811.6
(22) Anmeldetag: 20.02.2017
(51) Int. Cl.: H04L 12/24, H04L 12/26

(54) **ÜBERWACHUNG VON DATENRATEN**
MONITORING OF DATA RATES
SURVEILLANCE DE DÉBITS DE DONNÉES

(43) Veröffentlichungstag der Anmeldung: 22.08.2018
(73) Patentinhaber: Deutsche Telekom AG, 53113 Bonn (DE)
(72) Erfinder: Fock, Gunnar, 53227 Bonn (DE); Sieredzki, Thomas, 53227 Bonn (DE)
(74) Vertreter: Braun-Dullaeus Pannen Emmerling Patent- & Rechtsanwaltspartnerschaft mbB

(56) Entgegenhaltungen:
- WO-A1-2014/053992
- US-A1- 2005 058 083
- US-A1- 2005 094 567

## Beschreibung

Die Erfindung betrifft ein Verfahren und ein System zur Überwachung der Auslastung eines Datenleitungsnetzes, insbesondere eines Mobilfunknetzes, wobei mittels einer ersten Verbindung in dem Datenleitungsnetz Nutzdaten mit einer ersten Datenrate versendet werden, wobei eine unabhängige zweite Verbindung aufgebaut wird, der eine geringere Priorität als der ersten Verbindung zugeordnet ist und die mit der ersten Verbindung um eine Gesamtdatenrate im Datenleitungsnetz konkurriert, wobei mittels der zweiten Verbindung Testdaten mit einer zweiten Datenrate versendet und gemessen werden. Dadurch, dass die Nutzdaten eine höhere Priorität als die Testdaten aufweisen ist sichergestellt, dass die Datenrate der Nutzdaten durch die Testdaten nicht beeinträchtigt wird und bei Überlastungssituationen des Datenleitungsnetzes die Testdaten demnach nicht oder nur teilweise versendet werden.

Bekanntermaßen haben Netzbetreiber das Bedürfnis, die Einhaltung von SLAs ("service level agreements"), die sie mit ihren Kunden geschlossen haben, zu überwachen respektive für einen späteren Nachweis zu dokumentieren. In solchen SLAs werden den Kunden bestimmte Datenraten für deren Datenverkehr der Nutzdaten zugesichert, die nicht unbedingt konstant sein müssen. Das ist insbesondere dann der Fall, wenn der Netzbetreiber die Bereitstellung von Datenraten der Nutzdaten oberhalb bestimmter Schwellwerte zugesichert hat und wenn diese Datenraten seitens des Kunden angefordert werden. Beispielsweise ist es möglich, dass einem Kunden für 50 % seines Datenverkehrs eine Datenrate der Nutzdaten mit einem Schwellenwert von 10 Mbit/s und für weitere 50 % des Datenverkehrs der Nutzdaten ein Schwellenwert von 20 Mbit/s zugesichert ist. Wenn diese Datenraten wegen einer besonders hohen Netzauslastung ausnahmsweise nicht zur Verfügung gestellt werden könnten, hätte der Kunde aus dem Vertrag Ansprüche gegen den Netzbetreiber. Um diesen Ansprüchen entgegen zu treten, ist es für den Netzbetreiber zweckmäßig, die Auslastung der dem Kunden zur Verfügung gestellten ersten Verbindung, die im Verhältnis zu der zugesicherten Datenrate steht, zu kontrollieren und nachweisen zu können.

Zusätzlich haben Netzbetreiber das Bedürfnis ihr Datenleitungsnetz beständig zu überwachen und dessen Kapazitäten bzw. Auslastungsgrenzen auszutesten und zu kennen. Da die Datenleitungsnetze typischerweise nicht aus einzelnen Komponenten bestehen, sondern aus mehreren Komponenten zusammengesetzt sind folgt, dass sich die Gesamtdatenrate aus nicht trivialer Weise aus der Interaktion der mehreren Komponenten ergibt. Die Gesamtdatenrate lediglich theoretisch rechnerisch zu bestimmen, ist für die Praxis nicht geeignet, da vielfach nur ungenau quantifizierbare Faktoren die Gesamtdatenrate beeinflussen. Für die Netzbetreiber sind daher experimentelle Testmessungen unerlässlich, um die Gesamtdatenrate zu bestimmen. Aufgrund der experimentell bestimmten Leistung des Datenleistungsnetzes kann der Netzbetreiber verlässlich weitere Maßnahmen zum Ausbau seines Datenleitungsnetzes bzw. zur Einhaltung der in den SLAs vereinbarten Datenraten treffen.

Dabei stellen bislang bekannte Systeme keine Verfahren zur Verfügung, die verwendet werden können, um während des normalen Kundenbetriebs des Datenleitungsnetzes die Einhaltung der SLAs zu kontrollieren und/oder die Gesamtdatenrate des Datenleitungsnetzes zu bestimmen. Möglich ist zwar das testweise Auslasten des Systems mit Testdaten, die dieselbe Priorität wie die Nutzdaten aufweisen. Hierbei verbietet sich allerdings ein testweißes Auslasten des Datenleitungsnetzes im normalen Kundenbetrieb bis an die Belastungsgrenze, weil dadurch nicht nur die einzelne Verbindung, sondern das gesamte System negativ beeinflusst wird. Im schlimmsten Fall tragen solche Belastungstests dazu bei, dass vertraglich vereinbarte Werte in weiteren Teilen des Gesamtsystems nicht eingehalten werden können, da anstelle der Nutzdaten die Testdaten über das Datenleitungsnetz gesendet werden. Derzeit gibt es zwei Herangehensweisen, um die aktuelle Verfügbarkeit respektive die Auslastung zu überwachen:
So kann zum einen die aktuell genutzte Datenrate auf der ersten Verbindung am Zielpunkt unmittelbar gemessen werden. Liegt diese oberhalb des vereinbarten Schwellenwertes, gilt das SLA als erfüllt. Liegt die Datenrate jedoch unterhalb des Schwellenwertes, ist nicht klar, ob vom Kunden aktuell zu wenig Datenrate angefordert wird oder ob das System nicht in der Lage ist, eine gewünschte höhere Datenrate bereitzustellen. Mit dieser Vorgehensweise kann also nicht unterschieden werden, ob der Kunde eine Datenrate anfordert, die unterhalb des vereinbarten Schwellenwertes liegt und das System diese Datenrate bereit stellt, oder ob das System aktuell nur eine geringere Datenrate bereitstellen kann, die unterhalb des Schwellenwertes liegt, der Kunde jedoch Bedarf für eine höhere Datenrate hätte. Für die Überwachung des SLAs ist diese Vorgehensweise also nicht ausreichend.

Zum anderen kann - wie oben schon angesprochen - in Perioden niedriger Belastung zusätzliche Last im Rahmen von Belastungstests bis zur Belastungsgrenze in das System eingebracht werden, um die erreichbare Datenrate zu bewerten. Da jedoch die aktuell verfügbare Datenrate unbekannt ist, wird das System bis zur Vollauslastung mit künstlich erzeugter Zusatzlast beaufschlagt, was dazu führt, dass ein Teil der eigentlichen Nutzdaten nicht verarbeitet werden kann. Darüber hinaus führt diese künstlich generierte Last zu Auswirkungen in anderen Bereichen des Gesamtsystems, so dass vereinbarte SLAs in anderen Bereichen des Gesamtsystems nicht mehr eingehalten werden können.

Alle bekannten Verfahren basieren auf einem direkten Eingriff in das System und auf Messungen systeminterner Parameter, wobei als solche beispielsweise Paketverluste bei Überlast oder Zwei-Wege Laufzeiten ermittelt werden können. Es sind auch Messungen mit speziellen Paketen verschiedener Größe bekannt, die es erlauben, Teilsysteme zu vermessen ("Variable Packet Size Probing"). Andere Methoden basieren auf absoluten Ein-Wege Laufzeitmessungen oder auf der Messung relativer Laufzeiten zwischen Paketen im Nutzdatenstrom. Auf jeden Fall gehen alle bekannten Verfahren davon aus, dass die Nutzdatenübertragung und die Überwachung der Überlastsituation in derselben logischen Verbindung stattfindet.

Bei Verfahren mit direktem Eingriff in das bestehende Systeme und bei der Messung von systeminternen Parametern muss das System mitunter modifiziert werden, da es die Ausnahme ist, dass ein System die aktuell für eine logische Verbindung maximal verfügbare Datenrate ermittelt und nach außen berichtet kann. Bei Systemen mit mehreren Teilsystemen müssen diese jeweils unterschiedliche Zusammensetzungen von logischen Verbindungen unterstützen. Schließlich hängt die erreichbare Datenrate auf einer logischen Verbindung meist nicht nur von externen Systemparametern sondern auch von der Datenmenge ab, die auf den anderen logischen Verbindungen übertragen wird.

Die Methoden, die auf der Messung von Paketverlusten bei Überlast basieren, sind denen des konventionellen TCP ähnlich. Sie gehen von der Annahme aus, dass keine Paketverluste auftreten, solange die Verbindung unterhalb der Auslastungsgrenze betrieben wird. Bei Systemen, die inhärent mit Paketverlusten arbeiten, ist diese Annahme jedoch nur unzureichend erfüllt. Auch führt die Nutzung von TCP auf der eigentlichen Datenverbindung dazu, dass die Regelmechanismen die Paketverluste gering halten, indem sie die Datenrate implizit reduzieren. Das macht wiederum eine Unterscheidung von dem Fall der geringeren Nachfrage nach Datenrate schwierig.

Auch die Methoden, die auf der Messung von Zwei-Wege Laufzeiten basieren, sind Teil der (optionalen) TCP Mechanismen zur Regulierung von Datenmengen. Dazu ist eine Modifikation der Header der Nutzdaten erforderlich. Allerdings beeinflussen schwankende Laufzeiten die Resultate. Im Übrigen ist bei allen laufzeitbasierten Verfahren die Überwachung bestimmter Datenraten-Schwellenwerte schwierig, da der Zusammenhang zwischen der relativen Systemauslastung und der Änderungen der Laufzeiten indirekt und nur bedingt quantitativ zu ermitteln ist.

Das oben genannte "variable packet size probing" ist ungenau und erfordert das Einfügen spezieller Datenpakete von einer nicht zu vernachlässigenden Größe, die damit eine signifikante Zusatzlast verursachen.

WO 2014/053992 A1 zeigt in diesem Zusammenhang ein Verfahren und ein System zum Bestimmen der Qualität und Kapazität einer Transportüberwachungsverbindung zwischen Funkdienstknoten zur Erleichterung der lokalen Verwaltung von Teilnehmerverbindungen werden offenbart. Ein Verfahren umfasst das Senden erster Testpakete von einem ersten Funkdienstknoten an einen zweiten Funkdienstknoten über die Transportüberwachungsverbindung. Zweite Testpakete werden vom zweiten Funkdienstknoten empfangen. Bei den zweiten Testpaketen werden Informationen zu den ersten Testpaketen vom zweiten Funkdienstknoten hinzugefügt. Die zweiten Testpakete werden analysiert, um eine Qualität und eine Bandbreite der Transportüberwachungsverbindung zu bestimmen. Steuerungs- und Benutzerebenenfunktionen werden informiert, wenn die Transportüberwachungsleistung aufgrund der Qualität und Bandbreite beeinträchtigt und verbessert wird. Das Verfahren umfasst das Treffen von Entscheidungen zur Bereitstellung von Funkdiensten basierend auf der Qualität und Bandbreite der Transportüberwachungsverbindung.

Die US 2005/058083 zeigt in diesem Zusammenhang ein Verfahren zum Übertragen von Paketen über ein Netzwerk.

Die US 2005/094567 A1 zeigt in diesem Zusammenhang Systeme und Verfahren zum Testen eines Prozessors mit mindestens einer ersten Schnittstelle. In einer Ausführungsform umfasst das Verfahren das Konfigurieren einer zweiten Schnittstelle am Prozessor, so dass die konfigurierte zweite Schnittstelle einen oder mehrere Dienstqualitätsparameter aufweist, die für die erste Schnittstelle repräsentativ sind; Senden eines oder mehrerer Pakete über die konfigurierte zweite Schnittstelle, wobei das eine oder die mehreren Pakete für ein anderes Paket repräsentativ sind, das an der ersten Schnittstelle empfangen wurde; und Bestimmen eines oder mehrerer Leistungsparameter, die der ersten zu testenden Schnittstelle entsprechen, basierend auf dem einen oder den mehreren Paketen.

Neben der Notwendigkeit genauer Zeitreferenzen an den Endpunkten setzen Methoden basierend auf Ein-Wege Laufzeitmessungen voraus, dass Queues die Quellen von Verzögerungen und Verzögerungsänderungen im Gesamtsystem bilden. Das kann jedoch nur in wenigen Systemen vorausgesetzt werden. So kommt es gerade in Mobilfunksystemen zur Nutzung von Verbindungen mit deutlich unterschiedlichen Laufzeiten, zwischen denen auch während der Lebensdauer einer Verbindung gewechselt wird. Zudem muss in die Verbindung mit den Nutzdaten eingegriffen werden, um Markierungen zur Ermittlung der Laufzeiten einzubringen.

Letztendlich erfordern auch Methoden basierend auf der Messung relativer Laufzeiten das Einfügen von Paketen in den Nutzdatenstrom. Da solche Verfahren sensibel auf Änderungen im Nutzdatendurchsatz auch unterhalb der Auslastungsgrenze reagieren, sind sie für die hier zur Debatte stehenden Zwecke nicht geeignet.

Im Rahmen dieser Erfindung wird unter einer Datenrate das Verhältnis von Datenpaket zu Sendedauer des Datenpakets verstanden. Das Senden von Datenpaketen verläuft in einer quantisierten Art und Weise. Zudem wird das Volumen eines Datenpakets auch als die Höhe des Datenpakets bezeichnet, sodass ein höheres Datenpaket mit mehr Datenvolumen gleichgesetzt wird.

Aufgabe der Erfindung ist es nunmehr, ein mit einfachen Mitteln umzusetzendes Verfahren und System zur Überwachung des Datenleitungsnetzes bereitzustellen mit dem die Auslastung der ersten zu untersuchenden Verbindung und/oder die Gesamtdatenrate des Datenleitungsnetzes gemessen werden kann.

Diese Aufgabe wird durch das Verfahren nach Anspruch 1, eine Verwendung nach Anspruch 11 und das System nach Anspruch 12 gelöst. Bevorzugte Ausgestaltungen ergeben sich aus den Unteransprüchen.

Der Kern der Erfindung liegt anspruchsgemäß zunächst darin, dass die Testdaten ein Datenvolumen aufweisen, dessen Größenordnung dem der Nutzdaten entspricht, wobei die erste Datenrate und die zweite Datenrate zu der Gesamtdatenrate kombiniert und als Gesamtdatenrate empfangen und gemessen werden.

Dadurch, dass neben der zu überwachenden ersten logischen Verbindung eine zweite unabhängige logische Verbindung aufgebaut wird, der jedoch eine im Verhältnis zur ersten Verbindung geringere Priorität zugeordnet ist, wird die Datenrate der Nutzdaten über die erste logische Verbindung nicht durch die Testdaten gestört, welche über die zweite logische Verbindung mit niedrigerer Priorität übertragen werden. Das bedeutet, dass Datenpakete, die über die erste Verbindung geschickt werden sollen, den Vorrang vor Paketen auf der zweiten Verbindung haben. Die zweite Verbindung derart ausgestaltet, dass sie mit der ersten Verbindung um die Gesamtdatenrate im Datenleitungsnetz konkurriert.

Wenn also die gesamte im Datenleitungsnetz zur Verfügung stehende Datenrate von der ersten Verbindung verbraucht wird, bleiben keine Kapazitäten mehr für die zweite Verbindung übrig, sodass darüber gesendete Daten nicht am Zielpunkt ankommen. Da die Höhe der ersten Datenrate und/oder die Höhe der zweiten Datenrate bekannt sind, kann aus der gemessenen Gesamtdatenrate auf die Einhaltung der SLA-Bedingungen und/oder auf die Gesamtkapazität des Datenleitungsnetzes geschlossen werden, ohne dass hieraus nachteilige Effekte für den Kunden entstehen, da beide Datenraten unterschiedlich priorisiert sind. Wären die Höhen der Datenpakete der Testdaten deutlich geringer (zwischen 10 Byte und höchstens 100 KByte pro Sekunde) als die Höhe der Datenpakete der Nutzdaten, könnte die maximale Gesamtkapazität des Datenleitungsnetzes nur dann quantifiziert werden, wenn die Nutzdaten diese maximale Gesamtkapazität nahezu ausschöpfen würden. Dieser Zustand ist allerdings von den Netzbetreibern unerwünscht, da es in diesem Fall häufig zu Systemausfällen sowie zu Nichteinhaltung der SLA-Bedingungen kommen könnte.

In einer bevorzugten Ausgestaltung der Erfindung wird die erste Datenrate der ersten Verbindung am Zielpunkt ermittelt und überwacht. Bevorzugt wird die erste Datenrate ins Verhältnis zu einer vorbestimmten, insbesondere zu einer vertraglich zugesicherten, Datenrate gesetzt. Bei der Analyse können nun folgende Fälle unterschieden werden:
- Entspricht die gemessene Gesamtdatenrate der Summe der ursprünglich gesendeten Nutzdaten und der ursprünglich gesendeten Testdaten und/oder entsprechen die gemessenen Testdaten den ursprünglich gesendeten Testdaten folgt, dass das System am Zielpunkt zum Zeitpunkt der Messung noch nicht vollständig ausgelastet ist, und dass der Netzbetreiber über die Gesamtdauer der ersten Verbindung dem Kunden die Erfüllung der SLA-Bedingungen nachweisen kann.
- Ist die gemessene Gesamtdatenrate geringer als die Summe der Nutzdaten und der Testdaten, jedoch größer als die in den SLA-Bedingungen vereinbarte Datenrate und die gemessenen Testdaten geringer als die ursprünglich gesendeten Testdaten, so kann dem Kunden die Erfüllung der SLA-Bedingungen nachgewiesen werden, da aufgrund der höheren Priorisierung die Datenpakete der Nutzdaten vollständig übertragen wurden während die Testdaten zumindest nicht vollständig übertragen wurden.
- Ist die gemessene Gesamtdatenrate geringer als die in den SLA-Bedingungen vereinbarte Datenrate und die gemessenen Testdaten geringer als die ursprünglich gesendeten Testdaten und/oder werden gar keine Testdaten empfangen, so kann gefolgert werden, dass die SLA-Bedingungen durch den Netzbetreiber nicht erfüllt werden konnten.

Bevorzugt sind den Datenpaketen der Nutzdaten Datenpakete der Testdaten zugeordnet, wobei die zugeordneten Datenpakete möglichst zeitgleich versendet und empfangen werden. Dies ermöglicht eine zeitaufgelöste Analyse der Gesamtdatenrate des Datenleitungsnetzes.

Wie oben dargelegt, signalisiert ein Empfang der Testdaten eine noch nicht vollständige Auslastung der ersten Verbindung. Allerdings bedeutet kein Empfang von Testdaten am Zielpunkt nicht unbedingt, dass eine im SLA zugesicherte Datenrate nicht zur Verfügung stand, da der Kunde in dem Moment der Messung gerade eine im Verhältnis zur zugesicherten eine überhöhte Datenrate genutzt haben könnte. Wie vorstehend beschrieben, sind die SLA-Bedingungen erfüllt, wenn die Gesamtdatenrate über den in den SLA-Bedingungen zugesicherten Werten bezüglich der Datenrate liegt. Auch dann wären keine Testdaten über die zweite Verbindung übertragen worden. Der Kunde hätte aber auch keinen Grund, das SLA in Frage zu stellen. Dennoch ist es besonders vorteilhaft, wenn der Netzbetreiber zusätzlich zum Empfang der Testdaten auch noch den Datendurchsatz der Nutzdaten über die zu überwachende erste Verbindung am Zielpunkt während des Bestehens möglichst kontinuierlich ermittelt. Die so ermittelte Datenrate der Nutzdaten kann er dann in das Verhältnis zu einer vorbestimmten, insbesondere zu einer vertraglich zugesicherten, Datenrate setzen und feststellen, ob die im SLA zugesicherte Datenrate übertroffen wurde. Mit der kombinierten Messung des Empfangs der Testdaten und der Nutzdaten kann der Netzbetreiber jeglichen Nachweis bzgl. der Einhaltung seiner Verpflichtungen erfüllen.

Mit dieser kombinierten Vorgehensweise ist es somit möglich, Messwerte zu generieren, die eine Auswertung dahingehend erlauben, ob die in dem SLA zugesicherte Datenrate erreicht wurde oder nicht. Wie beschrieben wird dazu die aktuell erreichte Datenrate ermittelt und zudem überprüft, ob diese Datenrate durch die aktuell geringe Anforderung von Kundenseite oder durch die momentane Systemkapazität limitiert ist. Nur für den Fall, dass die Limitierung durch die Systemkapazität bedingt ist, wird dies als Nichterfüllung des SLAs gewertet.

Im Vergleich zu den bisher bekannten Verfahren erlaubt die erfindungsgemäße Vorgehensweise, die Einhaltung des SLAs bezüglich der Datenrate kontinuierlich und vollständig zu überwachen, ohne das System auf unzulässige Weise zu belasten. Das erfindungsgemäße Verfahren bedingt dabei lediglich eine geringe Wechselwirkung mit den zu überwachenden Nutzdatenströmen, da es auf der Nutzung der unabhängigen logischen zweiten Verbindung mit niedriger Priorität basiert.

Ist das Volumen der Datenpakete der Testdaten zumindest vereinzelt größer als das ihm zugeordnete Volumen der Datenpakete der Nutzdaten kann hieraus auf die technisch mögliche Datenrate der Gesamtverbindung geschlossen werden. Vorteilhaft werden die Testdaten mit einer vorab festgelegten Höhe der Datenpakete und unabhängig von der Höhe der Datenpakete der Nutzdaten gesendet, wobei hierdurch die Nutzdaten, also die erste Verbindung, überwacht werden. In einer bevorzugten Ausgestaltung entspricht die festgelegte Höhe der Datenpakete der Testdaten einer Datenrate, die in dem SLA zwischen einem Netzbetreiber und einem Kunden vereinbart sind. Alternativ wird die Höhe der Datenpakete der Testdaten vorab so gewählt, dass Datenpakete der Testdaten verloren gehen, wobei hierdurch die Höhe der technisch machbaren Gesamtdatenrate ermittelt wird. Wird die Höhe der Datenpakete der Testdaten in der Höhe der maximal technisch machbaren Gesamtdatenrate gewählt, so kann das Datenleitungsnetz bezüglich seiner zeitaufgelösten maximalen Belastbarkeit durch den Netzbetreiber überprüft werden.

Alternativ kann eine Ausführungsform geschaffen werden in welcher die Datenpakete der Testdaten in einer Weise an die ihnen zugeordneten Datenpakete der Nutzdaten angepasst werden, dass eine vorab vorgegebene Gesamtdatenrate erreicht wird, wobei hierdurch die erste Datenrate überwacht werden kann.

Bevorzugt wird der Empfang der Gesamtdatenrate zu Protokollzwecken aufgezeichnet, sodass der Netzbetreiber die protokollierten Daten sowohl für interne Zwecke als auch für Kommunikation mit dem Kunden nutzen kann. Das beschriebene Verfahren, welches in ein entsprechendes System eingebettet ist, kann vorteilhaft zur Kontrolle der Einhaltung der SLAs zwischen dem Netzbetreiber und dem Kunden verwendet werden.

Die Erfindung wird nachfolgend anhand der Figuren näher beschrieben. Es zeigen:
**Figur 1** eine Messung auf der zweiten Verbindung und der Gesamtdatenrate;
**Figuren 2a, b, c** ein erstes Ausführungsbeispiel bezüglich der Ausgestaltung der Nutzdaten, der Testdaten und der hieraus resultierenden Gesamtdatenrate;
**Figuren 3a, b, c** ein zweites Ausführungsbeispiel bezüglich der Ausgestaltung der Nutzdaten, der Testdaten und der hieraus resultierenden Gesamtdatenrate;
**Figuren 4a, b, c** ein drittes Ausführungsbeispiel bezüglich der Ausgestaltung der Nutzdaten, der Testdaten und der hieraus resultierenden Gesamtdatenrate;
**Figuren 5a, b, c** ein viertes Ausführungsbeispiel bezüglich der Ausgestaltung der Nutzdaten, der Testdaten und der hieraus resultierenden Gesamtdatenrate und
**Figuren 6a, b, c** ein fünftes Ausführungsbeispiel bezüglich der Ausgestaltung der Nutzdaten, der Testdaten und der hieraus resultierenden Gesamtdatenrate.

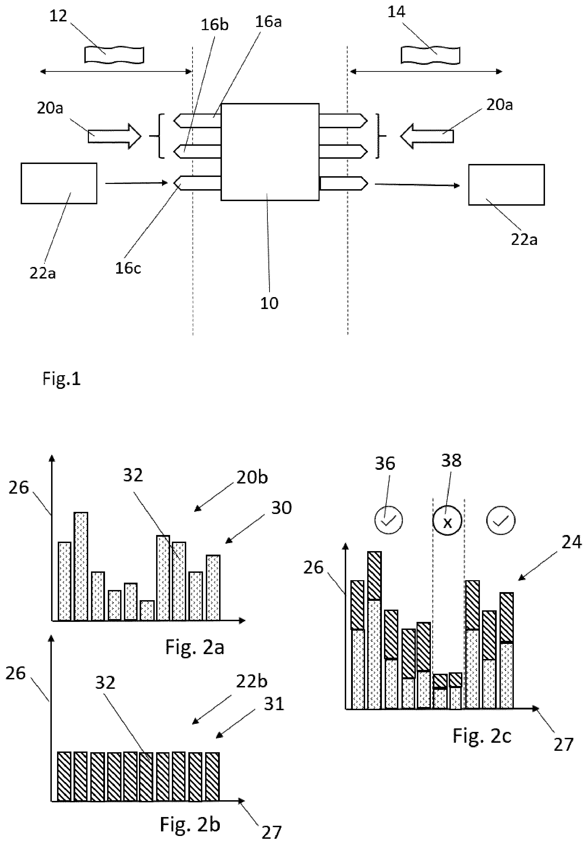

Figur 1 zeigt ein Datenleitungsnetz 10, das lediglich als "black box" dargestellt ist und dazu dient Daten, insbesondere Mobilfunkdaten, von einem Startpunkt 12 zu einem Zielpunkt 14 zu übertragen. Das Datenleitungsnetz 10 weist verschiedene logische Verbindungen 16a, b, c auf, welcher unterschiedliche Priorisierungen zugeordnet werden. Im vorliegenden Fall sind die logischen Verbindungen 16a, b für die Übertragung der Nutzdaten 30, also der SLA relevanten Daten, reserviert und weisen deshalb eine höhere Priorität auf als die logische Verbindung 16c, die für die Testdaten 31 vorgesehen ist. Vorliegend wird für die logische Verbindung 16a die Priorität N + 1, für die logische Verbindung 16b die Priorität N und für die logische Verbindung 16c die Priorität N - 1 gewählt. Dies bedeutet, dass die Nutzdaten 30 der logischen Verbindung 16a bevorzugt vor allen anderen Daten übertragen werden. Die Daten der logischen Verbindungen 16a, b, c werden in Fig. 1 am Startpunkt 12 in das Datenleitungsnetz 10 übermittelt und an den Zielpunkt 14 gesendet. Nachfolgend werden die logischen Verbindungen 16a, b der Nutzdaten 30 zu einer ersten Verbindung 20a mit einer ersten Datenrate 20b zusammengefasst und die logische Verbindung 16c der Testdaten als eine zweite Verbindung 22a mit einer zweiten Datenrate 22b bezeichnet. Am Zielpunkt 14 werden die Nutzdaten 30 und/oder die Testdaten 31 gemessen und zumindest die zweite Datenrate 22b und/oder die Gesamtdatenrate 24, welche der Summe der zeitaufgelösten Nutz- und Testdaten 30,31 entspricht, bestimmt. Die Versendung der Testdaten 31 hat keinen Einfluss auf die Verbindungen mit höherer Priorität - also hier der ersten Verbindung 20a.

Für die Dokumentation werden die Testdaten 31 in definierter zeitlicher Abfolge versendet und der entsprechende Empfang der Testdaten 31 zu Protokollzwecken aufgezeichnet wird. Je mehr Datenpakete 32 pro Zeiteinheit versendet werden, desto höher ist die zeitliche Auflösung der Messung. Vorliegend werden die Testdaten 31 kontinuierlich versendet, sodass das Datenleitungsnetz 10 beständig überwacht wird.

Beim Empfang der Testdaten 31 werden bestimmte Parameter ermittelt, die Rückschlüsse auf das Erreichen der Auslastung der Verbindungen 20a, 22a geben. Diese Parameter sind u.a. ein Paketverlust, eine im Verhältnis zu einem Schwellenwert erhöhte Paketlaufzeit, eine Änderung der Paketlaufzeit, eine Auswertung einer Paketlaufzeitdifferenz und/oder die Datenrate 20a, 22a bzw. die Datenpakete 32. Zusätzlich werden die Datenpakete mit Markierungen versehen, wobei als Markierungen insbesondere Sequenznummern und/oder Zeitstempel verwendet werden.

Für die Priorisierung der Verbindungen 20a, 22a werden die von dem jeweiligen Standard der Verbindung vorgegebenen Klassen, wie beispielsweise QCI Klassen, verwendet. Damit wird der zweiten Verbindung 22a eine Klasse niedrigerer Priorität als der ersten Verbindung 20a zugeordnet. Falls der ersten Verbindung 20a schon die Klasse mit niedrigster Priorität zugeordnet ist, ist es vorteilhaft, diese anzuheben, um die Klasse mit niedrigster Priorität für die zweite Verbindung 22a frei zu machen.

Mögliche Datenleitungsnetze 10, die das vorstehend beschriebene Verfahren umsetzen können sind beispielsweise zellularen Mobilfunksystemen mit "QoS handling" (QCI), im IP Umfeld (802.1p, 802.1q, TOS, DSCP) und - mit Einschränkungen - auch WLAN (802.11e)-Systeme.

Fig. 2a, b, c zeigen ein erstes Ausführungsbeispiel mit welchem überprüft werden kann, ob die in den SLA zugesicherte erste Datenrate 20b der Nutzdaten 30 erfüllt wird: In Fig. 2 und in den nachfolgenden Figuren wird durch die vertikale Achse 26 jeweils die Höhe des Datenvolumens repräsentiert, wobei die horizontal Achse jeweils die Zeitachse 27 in den Koordinatensystemen repräsentiert. Sowohl die Nutzdaten 30 als auch die Testdaten 31 werden vermittels diskreter Datenpakete 32 übertragen. Die Datenpakete 32 der Gesamtdatenrate 24, welche in Fig. 2c gezeigt ist, setzen sich aus der Summe der Datenpakete 32 der Nutzdaten 30 und der ihnen zugeordneten Datenpakete 32 der Testdaten 31 zusammen.

In Fig. 2b ist die ausgesandte Datenrate 22b der Testdaten 31 konstant, vorab festgelegt und unabhängig von der Datenrate 20b der Nutzdaten 30 in Fig. 2a. Entspricht die empfangene Datenrate 22b der Testdaten 31 am Zielpunkt 14 der ausgesendeten Datenrate 22b der Testdaten 31, kann nachgewiesen werden, dass das Datenleitungsnetz 10 in der Lage war zusätzlich zu den eigentlichen Nutzdaten 30 noch einen weiteren Datenstrom mit einer vordefinierten Datenrate zu übertragen. Der SLA gilt demnach als erfüllt, wenn die empfangenen Testdaten 31 der vorab festgelegten zweiten Datenrate 22b der Testdaten 31 aus Fig. 2b entsprechen. Die entsprechenden Bereiche der Gesamtdatenrate 24 sind mit einer "Häkchen"-Markierung 36 in Fig. 2c gekennzeichnet. Der SLA ist nicht erfüllt, wenn die empfangenen Testdaten 32 niedriger als ursprünglich gesendet sind, wobei diese Bereiche in der Gesamtdatenrate 24 mit einer "X"-Markierung 38 versehen sind. Zusätzlich kann durch das erste Ausführungsbeispiel auch die Erreichbarkeit von Datenraten unterhalb der vorab definierten Gesamtdatenrate 24 überwacht werden, indem die am Zielpunkt 14 gemessene Gesamtdatenrate 24 ausgewertet wird.

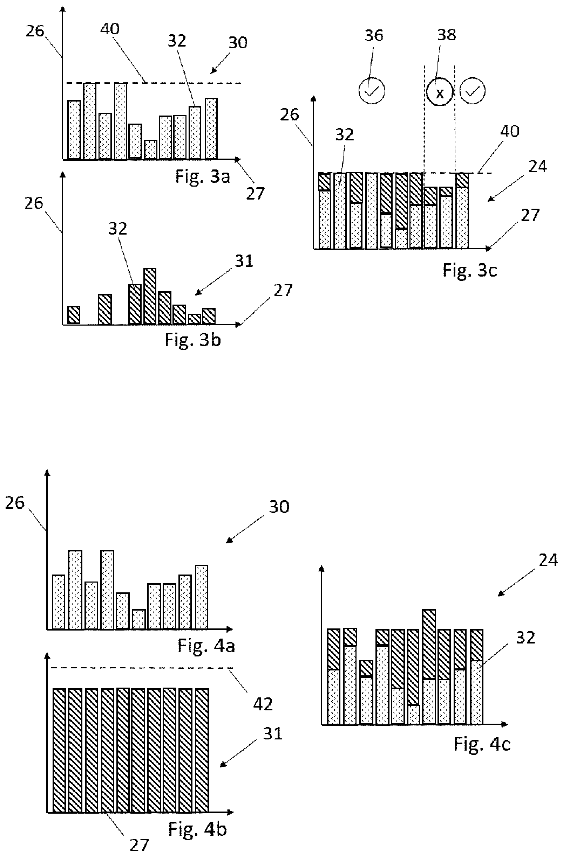

Im zweiten Ausführungsbeispiel, welches in den Figuren 3a, b, c illustriert ist, ist die ausgesandte Datenrate 22b der Testdaten 31 variabel, aber so an die Datenrate 20b der Nutzdaten 30 angepasst, dass die Gesamtdatenrate 24 eine vorgegebene Höhe 40 erreichen soll. Die vorgegebene Höhe 40 entspricht hierbei dem minimalen SLA-Durchsatz. Wird nun am Zielpunkt 14 die Gesamtdatenrate 24 gemessen, gelingt es nachzuweisen, dass das Datenleitungsnetz 10 die Übertragung einer Datenrate in der vorgegebenen Höhe 40 ermöglicht. Der SLA gilt als erfüllt, wenn die Gesamtdatenrate 24 am Zielpunkt 14 beim Empfänger die vorgegebene Höhe 40 erreicht, was wiederum durch die "Häkchen"-Markierung 36 in Fig. 3c angezeigt ist. Der SLA gilt als nicht erfüllt, wenn die Gesamtdatenrate 24 nicht die vorgegebene Höhe 40 erreicht, was wiederum durch die "X"-Markierung 38 in Fig. 3c gekennzeichnet ist. Hierbei ist es unerheblich, welche Anteile der Gesamtdatenrate 24 nicht übertragen worden sind.

Im dritten Ausführungsbeispiel, welches in den Figuren 4a, b, c illustriert ist, ist die ausgesendete zweite Datenrate 22b der Testdaten 31 so hoch bzw. wird dynamisch so angepasst, dass grundsätzlich Datenpakete 32 der Testdaten 31 verloren gehen. Die Summenbildung der Nutzdaten 30 und der Testdaten 31 zur Gesamtdatenrate 24 am Zielpunkt 14 gibt Auskunft über die aktuell theoretisch erreichbare erste Datenrate 20b der Nutzdaten 30. Die Höhe der Datenpakete 32 der Testdaten 31 ist hierbei aber geringer als die höchste technisch mögliche Datenrate 42 auf der Gesamtverbindung.

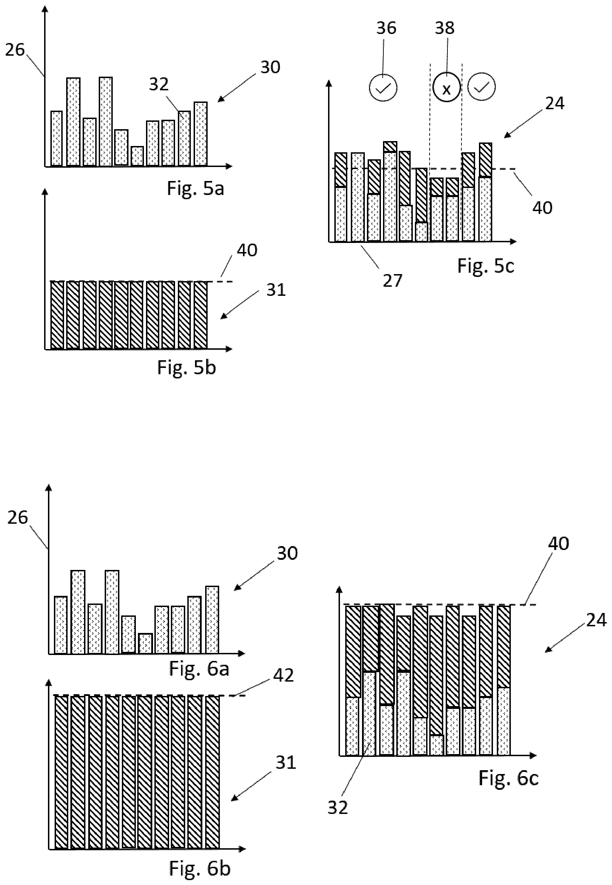

Im vierten Ausführungsbeispiel, welches in den Figuren 5a, b, c illustriert ist, ist die ausgesandte Datenrate 22b der Testdaten 31 konstant und entspricht der im SLA vereinbarten Datenrate. Dies erlaubt am Zielpunkt 14 zu ermitteln, ob die im SLA vereinbarte Datenrate unabhängig vom aktuellen Bedarf erreicht werden kann. Bei dieser Implementierung muss bei der Generierung der Datenrate 22b der Testdaten 31 nicht die aktuelle Datenrate 20b der Nutzdaten 30, wie im zweiten Ausführungsbeispiel, berücksichtigt werden. Der SLA gilt als erfüllt, wenn die Gesamtdatenrate 24 am Zielpunkt 14 gleich oder höher der geforderten Datenrate gemäß des SLAs ist. Der SLA gilt als nicht erfüllt, wenn die Gesamtdatenrate 24 am Zielpunkt 14 geringer ist als die im SLA vereinbarte Datenrate.

Im fünften Ausführungsbeispiel, welches in den Figuren 6a, b, c illustriert ist, ist die ausgesendete Datenrate 22b der Testdaten 31 konstant, vordefiniert und entspricht der maximal technisch möglichen Datenrate des Datenleitungsnetzes 10 - im Mobilfunk wäre dies beispielsweise der theoretische Gesamtdatendurchsatz einer Zelle. Dies erlaubt es auf der Empfängerseite am Zielpunkt 14 zu bestimmen, wie hoch die zum jeweiligen Zeitpunkt maximal erreichbare Höhe der Nutzdaten 30 ist, unabhängig davon, wie hoch der aktuelle Bedarf für die Nutzdaten 30 ausgeprägt ist.

## Patentansprüche

1. Verfahren zur Überwachung der Auslastung eines Datenleitungsnetzes (10), insbesondere eines Mobilfunknetzes, wobei das Datenleitungsnetz (10) zur Übertragung von Daten von einem Startpunkt (12) zu einem Zielpunkt (14) dient, wobei
mittels einer ersten logischen Verbindung (20a) in dem Datenleitungsnetz (10) Nutzdaten (30) mit einer ersten Datenrate (20b) versendet werden, wobei
eine unabhängige zweite logischen Verbindung (22a) aufgebaut wird, der eine geringere Priorität als der ersten Verbindung (20a) zugeordnet ist und die mit der ersten Verbindung (20a) um eine Gesamtdatenrate (24) im Datenleitungsnetz (10) konkurriert, wobei
mittels der zweiten Verbindung (22a) Testdaten (31) mit einer zweiten Datenrate (22b) versendet werden,
**dadurch gekennzeichnet,**
**dass** die Datenpakete der Testdaten (31) ein Datenvolumen aufweisen, das der Größenordnung der Datenpakete der Nutzdaten (30) entspricht,
**dass** am Zielpunkt (14) die Nutzdaten (30) und die Testdaten (31) gemessen werden und eine gemessene Gesamtdatenrate (24), welche der Summe der zeitaufgelösten gemessenen Nutz- und Testdaten (30, 31) entspricht, bestimmt wird,
wobei aus der gemessenen Gesamtdatenrate auf die Auslastung der der ersten Verbindung geschlossen wird,
wobei das Datenleitungsnetz (10) am Zielpunkt (14) zum Zeitpunkt der Messung noch nicht vollständig ausgelastet ist,
- wenn die gemessene Gesamtdatenrate der Summe der ursprünglich gesendeten Nutzdaten und der ursprünglich gesendeten Testdaten und/oder die gemessenen Testdaten den ursprünglich gesendeten Testdaten entsprechen
oder
- wenn die gemessene Gesamtdatenrate geringer als die Summe aus der ersten Datenrate (20b) und der zweiten Datenrate (22b) ist, jedoch größer als eine mit einem Kunden vereinbarte Datenrate ist und die gemessenen Testdaten geringer als die zweite Datenrate (22b) ist.

2. Verfahren nach Anspruch 1,
**dadurch gekennzeichnet,**
**dass** die erste Datenrate (20b) der ersten Verbindung (20a) am Zielpunkt (14) ermittelt und überwacht wird, und dass die erste Datenrate (20b) ins Verhältnis zu einer vorherbestimmten, insbesondere zu einer vertraglich zugesicherten, Datenrate gesetzt wird.

3. Verfahren nach Anspruch 1 oder 2,
**dadurch gekennzeichnet,**
**dass** Datenpakete (32) der Nutzdaten (32) Datenpaketen (32) der Testdaten (31) zugeordnet werden, und dass die zugeordneten Datenpakete (32) möglichst zeitgleich versendet und empfangen werden.

4. Verfahren nach Anspruch 3,
**dadurch gekennzeichnet,**
**dass** das Volumen der Datenpakete (32) der Testdaten (31) zumindest vereinzelt größer ist als das ihnen zugeordnete Volumen der Datenpakete der Nutzdaten (30).

5. Verfahren nach einem der vorherigen Ansprüche,
**dadurch gekennzeichnet,**
**dass** die Testdaten (31) mit einer vorab festgelegten Höhe (40) der Datenpakete (32) und unabhängig von der Höhe (40) der Datenpakete (32) der Nutzdaten (30) gesendet werden, wobei
die festgelegte Höhe (40) der Datenpakete (32) der Testdaten (31) einer Datenrate entspricht, die in Service Level Agreements ("SLA") zwischen einem Netzbetreiber und einem Kunden vereinbart sind.

6. Verfahren nach Anspruch 5,
**dadurch gekennzeichnet,**
**dass** die Höhe (40) der Datenpakete (32) der Testdaten (31) vorab so gewählt wird, dass Datenpakete (32) der zweiten Verbindung verloren gehen, und dass hierdurch die Höhe (40) der technisch machbaren Gesamtdatenrate (24) ermittelt wird.

7. Verfahren nach Anspruch 3,
**dadurch gekennzeichnet,**
**dass** die Datenpakete (32) der Testdaten (31) in einer Weise an die ihnen zugeordneten Datenpakete (32) der Nutzdaten (30) angepasst werden, dass eine vorgegebene Gesamtdatenrate (24) erreicht wird, und dass hierdurch die erste Datenrate (20b) überwacht wird.

8. Verfahren nach einem der vorherigen Ansprüche,
**dadurch gekennzeichnet,**
**dass** der Empfang der Gesamtdatenrate (24) zu Protokollzwecken aufgezeichnet wird.

9. System zur Umsetzung des Verfahrens nach einem der vorherigen Ansprüche.

## Claims

1. A method for monitoring the capacity of a data-line network (10), in particular a mobile phone network, wherein the data-line network (10) is used to transfer data from a starting point (12) to a target point (14), wherein
user data (30) are transmitted with a first data rate (20b) by means of a first logical connection (20a) in the data-line network (10), wherein
an independent second logical connection (22a) is established, to which is assigned a lower priority than to the first connection (20a) and which competes with the first connection (20a) for an overall data rate (24) in the data-line network (10), wherein
test data (31) are transmitted with a second data rate (22b) by means of the second connection (22a),
**characterized in that**
the data packets of the test data (31) have a data volume which corresponds to the order of magnitude of the data packets of the user data (30), that at the time (14), the user data (30) and the test data (31) are measured and a measured overall data rate (24) corresponding to the sum of the time-resolved, measured user and test data (30, 31) is determined, wherein the capacity of the first connection is extrapolated from the measured overall data rate,
wherein the data-line network (10) is still not at full capacity at the target point (14) at the time of the measurement,
- if the measured overall data rate corresponds to the sum of the originally transmitted user data and of the originally transmitted test data and/or the measured test data correspond to the originally transmitted test data or
- if the measured overall data rate is less than the sum of the first data rate (20b) and the second data rate (22b), but greater than a data rate agreed upon with a client and the measured test data are less than the second data rate (22b).

2. The method according to Claim 1,
**characterized in that**
the first data rate (20b) of the first connection (20a) is determined and monitored at the time (14), and that the first data rate (20b) is compared to a predetermined, in particular contractually guaranteed data rate.

3. The method according to Claim 1 or 2,
**characterized in that**
data packets (32) of the user data (32) are assigned to data packets (32) of the test data (31), and that the assigned data packets (32) are transmitted and received as simultaneously as possible.

4. The method according to Claim 3,
**characterized in that**
the volume of the data packets (32) of the test data (31) is greater, at least occasionally, than the volume of the data packets of the user data (30) assigned to them.

5. The method according to any one of the preceding claims, **characterized in that**
the test data (31) are transmitted with a preset size (40) of the data packets (32) and independently of the size (40) of the data packets (32) of the user data (30), wherein the set size (40) of the data packets (32) of the test data (31) corresponds to a data rate agreed upon in service level agreements ("SLAs") between a network operator and a client.

6. The method according to Claim 5,
**characterized in that**
the size (40) of the data packets (32) of the test data (31) is pre-selected such that data packets (32) of the second connection are lost, and that the size (40) of the technologically feasible overall data rate (24) is determined thereby.

7. The method according to Claim 3,
**characterized in that**
the data packets (32) of the test data (31) are adapted to the data packets (32) of the user data (30) assigned to them in such a way that a pre-specified overall data rate (24) is reached, and that the first data rate (20b) is monitored thereby.

8. The method according to any one of the preceding claims,
**characterized in that**
the reception of the overall data rate (24) is recorded for logging purposes.

9. A system for implementing the method according to any one of the preceding claims.

## Revendications

1. Procédé, destiné à superviser le niveau d'occupation d'un réseau de données (10), notamment d'un réseau de radiotéléphonie mobile, le réseau de données (10) servant à transférer des données d'un point de départ (12) vers un point de destination (14),
au moyen d'une première connexion logique (20a) dans le réseau de données (10), des données utiles (30) étant envoyées avec un premier débit de données (20b),
une deuxième connexion logique (22a) indépendante étant établie, à laquelle est affectée une priorité moindre que celle de la première connexion (20a) et qui rivalise avec la première connexion (20a) pour un débit de données agrégé (24) dans le réseau de données (10),
au moyen de la deuxième connexion (22a), des données de test (31) étant envoyées avec un deuxième débit de données (22b),
**caractérisé**
**en ce que** les paquets de données des données de test (31) présentent un volume de données qui correspond à l'ordre de grandeur des paquets de données des données utiles (30),
**en ce qu'**au point de destination (14), les données utiles (30) et les données de test (31) sont mesurées et un débit de données agrégé (24) mesuré, qui correspond à la somme des données utiles et des données de test (30, 31) mesurées résolues dans le temps est déterminé à partir du débit de données agrégé mesuré étant déduit le niveau d'occupation de la première connexion,
le réseau de données (10) n'étant pas encore entièrement saturé au point de destination (14), au moment du processus de mesure,
- si le débit de données agrégé mesuré correspond à la somme des données utiles initialement envoyées et des données de test initialement envoyées et/ou les données de test mesurées correspondent aux données de test initialement envoyées
ou
- si le débit de données agrégé mesuré est inférieur à la somme du premier débit de données (20b) et du deuxième débit de données (22b), toutefois supérieur à un débit de données convenu avec un client et si les données de test mesurées sont inférieures au deuxième débit de données (22b).

2. Procédé selon la revendication 1,
**caractérisé**
**en ce que** le premier débit de données (20b) de la première connexion (20a) au point de destination (14) est déterminé et supervisé et en ce que le premier débit de données (20b) est mis en rapport avec un débit de données précédemment défini, notamment avec un débit de données contractuellement garanti.

3. Procédé selon la revendication 1 ou 2,
**caractérisé**
**en ce que** des paquets de données (32) des données utiles (32) sont affectés à des paquets de données (32) des données de test (31) et en ce que les paquets de données (32) affectés sont envoyés et réceptionnés le plus simultanément possible.

4. Procédé selon la revendication 3,
**caractérisé**
**en ce que** le volume des paquets de données (32) des données de test (31) au moins désolidarisé est supérieur au volume des paquets de données des données utiles (30) qui leur est affecté.

5. Procédé selon l'une quelconque des revendications précédentes,
**caractérisé**
**en ce que** les données de test (31) sont envoyées à un montant (40) préalablement fixé des paquets de données (32) et indépendamment du montant (40) des paquets de données (32) des données utiles (30),
le montant (40) fixé des paquets de données (32) des données de test (31) correspondant à un débit de données qui est convenu dans des Service Level Agreements (« SLA », accords de niveau de services) entre un exploitant de réseau et un client.

6. Procédé selon la revendication 5,
**caractérisé**
**en ce que** le montant (40) des paquets de données (32) des données de test (31) est préalablement choisi de sorte que les paquets de données (32) de la deuxième connexion se perdent et que de ce fait, le montant (40) du débit de données agrégé (24) techniquement réalisable soit déterminé.

7. Procédé selon la revendication 3,
**caractérisé**
**en ce que** les paquets de données (32) des données de test (31) sont adaptés aux paquets de données (32) des données utiles (30) qui leur sont affectés de sorte que soit atteint un débit de données agrégé (24) prédéfini et que de ce fait le premier débit de données (20b) soit supervisé.

8. Procédé selon l'une quelconque des revendications précédentes,
**caractérisé**
**en ce que** la réception du débit de données agrégé (24) est enregistrée à des fins de journalisation.

9. Système destiné à mettre en application le procédé selon l'une quelconque des revendications précédentes.
